# EUROPEAN PATENT SPECIFICATION

(11) **EP 0 732 643 B1**
(45) Date of publication and mention of the grant of the patent: **09.02.2005**
(21) Application number: 96103846.0
(22) Date of filing: 12.03.1996
(51) Int. Cl.: G05D 23/19, F25D 3/11

(54) **Process for the temperature control of flour in a process for fabricating dough**
Verfahren zur Temperaturregelung von Mehl bei der Herstellung von Teig.
Procédé pour le contrôle de température de farine dans une procédé pour la fabrication de pâte

(30) Priority: 16.03.1995 BE 9500237
(43) Date of publication of application: 18.09.1996
(73) Proprietor: Messer Griesheim GmbH, 65933 Frankfurt am Main (DE); SPIROMATIC NV, 9810 Nazareth (BE)
(72) Inventor: Dhont Dirk, B-9810 Nazareth (BE); Desmeth Jan, B-1600 Sint-Pieters-Leew (BE)
(74) Representative: Berdux, Klaus, Dipl.-Ing.

(56) References cited:
- EP-A- 0 542 055
- EP-A- 0 583 692
- EP-A- 0 611 933
- DE-A- 3 522 684
- FR-A- 2 142 523
- US-A- 4 528 819
- US-A- 4 569 204
- US-A- 4 813 245
- US-A- 5 005 377

## Description

The invention relates to a process for the temperature control of flour in a process for the fabrication of dough, where the flour's temperature is regulated by bringing it into contact with a cooling agent during transportation in a closed conveying system.

In different areas of the industry the problem exists that the temperature of substances in powder and/or pellet form has to be controllable. The following products can be taken into account for this process. PVC, polyethylene and polypropylene powders or pellets, washing powders, salts such as calcium sulphate or sodium chloride and specifically products in powder or pellet form for the food industry such as sugar and in particular flour for the preparation of different kinds of dough.

The temperature control of these substances can be of importance for various reasons. For instance, sometimes it may be necessary to control the temperature of these substances in order to avoid sticking, especially for products in powder and/or pellet form with a relatively low melting point. Furthermore, it may be necessary to bring the substance to the desired temperature before it is introduced in the production process.

In DE-A1-3522684 a device for treating rice and similar goods at low temperature is described. The device comprises a thermically isolated chamber with a rotating spiral for conveying the goods. The chamber is cooled by spraying a cooling medium like liquid nitrogen into the chamber.

A cryogenic fluid screw operated freezer for particulate material such as foodstuffs like diced carrots, peas and shrimps is described in US-A-4528819.

The EP-A1-0542055 describes a device for the controlled cooling of grapes. The device comprises a transporting zone and injector means for directing cryogenic fluid onto the grapes.

A control system for a tunnel freezer, where the temperature in the tunnel is determined by controlling the flow of liquid nitrogen through a inlet pipe, is known from EP-A1-583692.

In the preparation of bakery products it is particularly important to control the temperature of e.g. the used doughs, in order to achieve a uniform product. The temperature control, or the possibility to preset the different temperatures, is also necessary because the different bakery products require a different kind of dough. Controlling the dough temperature is preferably achieved by controlling the temperature of the different raw materials. The most important raw materials are powdery substances, usually flour and water. Of these two main substances the water temperature can be controlled relatively easy by means of a separate cooling.

Concerning the solid substances it is possible to control their temperature in the storage area or the silo. This however, does not allow their temperature to be changed in function of the different doughs. Such a system is therefore not flexible enough.

In an other known system the temperature of the substance is controlled by bringing it into contact with a cooling medium during the transportation in a closed conveying system, more specifically a pneumatic conveying system. As cooling agent, in this known process the transporting air, is used which is cooled beforehand. This known system, however, has the disadvantage that the temperature of the substance cannot easily be kept under accurate control. Moreover, cooling losses occur through the outlet of the conveying and cooling medium air. Furthermore, there is the problem of condensate creation. This condensate causes the flour to form a sticky substance that can result in blockage.

The object of the invention is to create a simpler and more flexible process that allows a better control of the temperature in a process for the fabrication of dough.

The problem is solved by a process with features described in claim 1.

The present invention is characterised by the fact that a preset amount of the cryogenic liquid is injected in said closed part of the conveying system during the transport of the flour through this closed part of the conveying system.

Because the amount of injected cryogenic liquid can be easily regulated, also the temperature of the substance can be easily and moreover accurately controlled in a flexible way.

Liquid carbon dioxide is used as cryogenic liquid. Compared to other cryogenic liquids, such as liquid nitrogen, liquid CO₂ offers the advantage that it can be mixed with the substance in the form of snow, which sublimation temperature is relatively high. Therefore local undercooling of the substance is easily avoided.

The cryogenic liquid is injected at two or more locations in said closed conveying system. This is also to avoid local undercooling of the substance.

The substance is transported in said closed part of the bulk conveying system by means of a rotating spiral.

This offers the important advantage that the cryogenic liquid is thus mixed with the substance achieving a homogeneous cooling, more specificaily when liquid CO₂ is used that is mixed with the substance in the form of solid CO₂ snow.

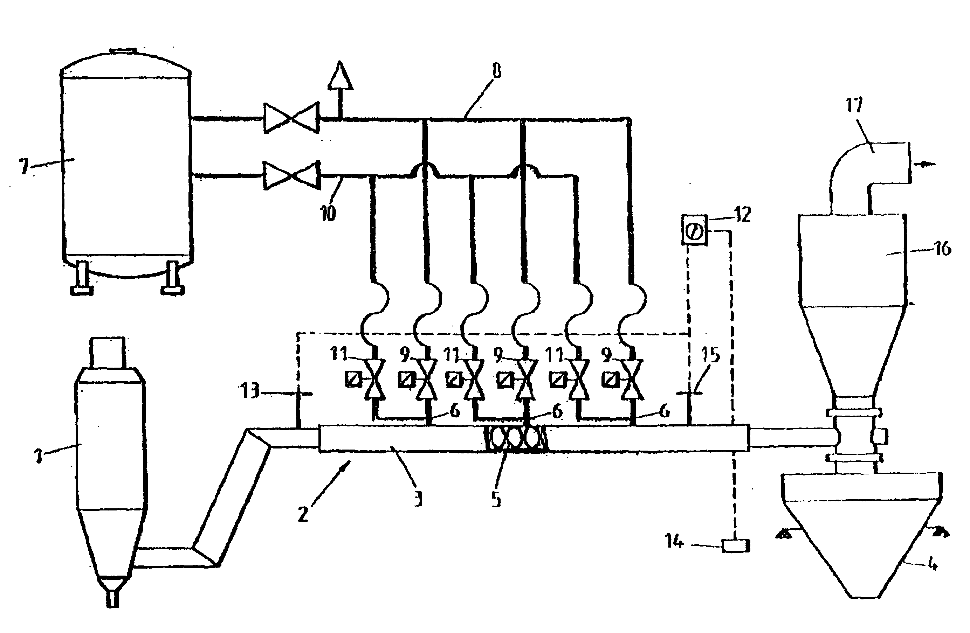

Further advantages and characterisitcs of the present invention will become apparent from the following description with reference to a drawing including a single figure of an embodiment of an installation for the control of the temperature of flour in powder form according to the invention. This description is however only given as an example and is not meant to limit the application range of the invention as determined by the enclosed claims. The used reference numbers relate to the schematic presentation of a possible realisation according to the invention.

The temperature control is done in a closed part of the conveying system with which the substance is transported in bulk to the production process. The following description will be mainly focused on the temperature control of substances in powder form for the fabrication of doughs for bakery products.

The installation shown in the drawing contains a storage vessel or tank 1 for a substance in powder form for the fabrication of a dough, namely for flour, and a closed conveying system 2 for the transportation of the substance from the storage vessel 1 to an installation not represented, in particular to a kneader, for the production of a dough. Before being conveyed to this kneader, the substance is first put in a weighing bunker 4.

According to the invention it is important that the conveying system 2 contains at least one closed part 3, in which - to control the temperature - the transported substance can be brought into contact with a cooling agent. To this end the installation contains means for the injection of a predetermined amount of cryogenic liquid, as cooling medium in the closed part 3 of the conveying system 2. Next to this closed part 3 the conveying system 2 can be open.

In the represented embodiment the closed part 3 of the conveying system contains a tube with a spiral 5 inside for the transportation of the substance through this tube. The injection elements for the injection of the cryogenic liquid in the closed part 3 preferably contain al least two and, as shown, for instance three injectors 6 that end in the conveying tube. Injection at several places helps to avoid local undercooling of the conveyed substance. The injection of the cryogenic liquid in combination with the transportation by means of a spiral offers the additional advantage that no cooling losses occur to the transportation medium air and thus air humidity cannot have a large influence.

As cryogenic liquid liquid carbon dioxide is used.

Upon the injection of this liquid CO₂ snow is formed because of the adiabatic expansion it causes. This snow has a sublimation temperature of ca. -79°C, which is obviously higher than the boiling point of liquid nitrogen so local undercooling can be more easily avoided with liquid carbon dioxide. Moreover, the solid CO₂ snow can be more easily mixed with the substance in powder form. A homogeneous spread of this CO₂ snow in the substance further enhances a more homogeneous cooling.

Such a homogeneaus spread of the CO₂ snow in the substance in powder form can be easily obtained by transporting this substance in the closed part 3 by means of a rotating spiral 5. By using this spiral 5 for the transport automatically a better blend is reached, this opposed to the use of for instance an Archimede's screw. Such an Archimede's screw does not only have the disadvantage that the cold transfer is less good, but it also has a higher consumption and causes problems regarding adhesion to the back of the screw blades. In the presented embodiment the liquid CO₂ is led from a storage tank 7, through tubes 8 and valves 9, particularly magnetic valves, to the injectors 6. The pressure for these valves 9 can be for instance 16 bar. Therefore the carbon dioxide is present there in liquid form and at -20°C. When opening the valves 9 a short depressurisation occurs to below 5.2 bar, the critical pressure for CO₂. Because of this depressurisation CO₂ snow can be formed between valve 9 and the injector 6. The same can occur when valve 9 is being closed.

In order to avoid possible blockage, tubes 10 with valves 11 are foreseen to convey the gaseous cryogenic liquid to the injectors 6. Formation of CO₂ snow in the injectors 6 is prevented by injecting gaseous cryogenic liquid, for example at 10 bar, right before and right after the opening or closing of the valves 9.

The amount of cryogenic liquid that is injected into the conveying system 3, can be regulated by means of a control unit 12, for instance a PLC control unit, more specifically by regulating the valves 9.

In order to calculate the required amount of cryogenic liquid, the control unit 12 is connected to a sensor 13 to measure the starting temperature of the substance upstream compared to the injection points and this control unit 12 contains means 14 for the determination of the desired end temperature of the substance. The amount of cryogenic liquid to be injected depends therefore also on the conveyed amount of substance.

The means 14 for determining the desired end temperature can be foreseen purely to enter the desired end temperature or to calculate this end temperature personally based on for instance a recipe to be entered.

Preferably the control unit 12 is also connected to a sensor 15 to measure the end temperature of the substance downstream compared to the named injection means. In this case the control unit 12 is then foreseen for the adjustment of the injected cryogenic liquid in function of the possible difference between the measured end temperature and the preset end temperature. As sensor 13 and 15 infrared thermo-senors can be used.

In the presented embodiment, at the end of the closed part 3 of the conveying system 2, more precisely above the weigh hopper 4, a filter 16 is foreseen having thereabove an outlet 17 for the gases created by the cryogenic liquid.

From the description above of a preferred embodiment it will be clear that the invention is not limited to this embodiment but different kinds of changes can be made to them without going beyond the range of the enclosed claims.

For instance it is possible to heat the substance in the storage vessel 1 so that the initial temperature is higher and the temperature via the process can be controlled in a flexible way in a broader temperature range.

## Claims

1. Process for the temperature control of flour in a process for the fabrication of dough, where the flour's temperature is regulated by bringing it into contact with a cooling agent during transportation in a closed conveying system,
**characterized in that**
the flour in powder form is transported through a bulk conveying system (2) with at least one closed part (3) to an installation for the production of the dough, the flour's temperature being regulated by bringing it into contact with the cooling agent by injection of liquid carbon dioxide as a cryogenic liquid into the closed part (3) via at least two injectors (6), each injector (6) being connected to a valve (9), and the amount of cryogenic liquid that is injected is regulated by regulating the valves (9) and the flour in the closed part (3) of the bulk conveying system (2) is transported and mixed with produced carbon dioxide snow by means of a rotating spiral (5).

2. Process according to claim 1, **characterized in that**
the amount of cryogenic liquid to be injected depends on the conveyed amount of flour.

3. Process according to claim 1 or 2, **characterized in that**
a control unit (12) is regulating the amount of injected cryogenic liquid.

## Patentansprüche

1. Verfahren zur Temperaturregelung von Mehl in einem Prozess zur Herstellung von Teig, wobei die Temperatur des Mehls dadurch reguliert wird, dass es während des Transports in einem geschlossenen Fördersystem mit einem Kühlmittel in Kontakt gebracht wird,
**dadurch gekennzeichnet, dass**
das Mehl in Pulverform durch ein Schüttgutfördersystem (2) mit mindestens einem geschlossenen Teil (3) zu einer Anlage zur Herstellung des Teigs transportiert wird, wobei die Temperatur des Mehls dadurch reguliert wird, dass man es durch Einspritzen von flüssigem Kohlendioxid als kryogene Flüssigkeit in den geschlossenen Teil (3) über mindestens zwei Einspritzvorrichtungen (6) mit dem Kühlmittel in Kontakt bringt, wobei jede Einspritzvorrichtung (6) mit einem Ventil (9) verbunden ist, und die Menge an kryogener Flüssigkeit, die eingespritzt wird, durch Regulieren der Ventile (9) reguliert und das Mehl in dem geschlossenen Teil (3) des Schüttgutfördersystems (2) mittels einer rotierenden Spirale (5) transportiert und mit erzeugtem Kohlendioxidschnee vermischt wird.

2. Verfahren nach Anspruch 1, **dadurch gekennzeichnet, dass**
die einzuspritzende Menge an kryogener Flüssigkeit von der beförderten Mehlmenge abhängig ist.

3. Verfahren nach Anspruch 1 oder 2, **dadurch gekennzeichnet, dass** eine Steuereinheit (12) die Menge an eingespritzter kryogener Flüssigkeit reguliert.

## Revendications

1. Procédé de régulation de la température de la farine dans un procédé de fabrication de pâte, la température de la farine étant régulée en l'amenant au contact d'un agent réfrigérant durant son acheminement dans un système de transport fermé,
**caractérisé en ce que**
la farine sous forme pulvérulente est acheminée à travers un système de transport en vrac (2) comportant au moins une partie fermée (3) jusqu'à une installation de fabrication de la pâte, la température de la farine étant régulée en l'amenant au contact de l'agent réfrigérant par injection de dioxyde de carbone liquide en tant que liquide cryogénique dans la partie fermée (3) par le biais d'au moins deux injecteurs (6), chaque injecteur (6) étant raccordé à une vanne (9), et la quantité de liquide cryogénique injecté est régulée par régulation des vannes (9) et la farine dans la partie fermée (3) du système de transport en vrac (2) est acheminée et mélangée à de la neige carbonique produite au moyen d'une spirale rotative (5).

2. Procédé selon la revendication 1, **caractérisé en ce que**
la quantité de liquide cryogénique à injecter dépend de la quantité de farine acheminée.

3. Procédé selon la revendication 1 ou 2, **caractérisé en ce que**
une unité régulatrice (12) régule la quantité de liquide cryogénique injecté.
